# EUROPEAN PATENT SPECIFICATION

(11) **EP 0 774 637 B1**
(45) Date of publication and mention of the grant of the patent: **27.02.2002**
(21) Application number: 96118101.3
(22) Date of filing: 12.11.1996
(51) Int. Cl.: F28D 1/03, B29C 45/14, B21D 53/04, D06F 58/24

(54) **A method for producing a cross-flow heat-exchanging device**
Verfahren zur Herstellung eines Kreuzstrom-Wärmetauschers
Procédé pour fabriquer un échangeur de chaleur à courants croisés

(30) Priority: 20.11.1995 IT PM950059
(43) Date of publication of application: 21.05.1997
(73) Proprietor: Electrolux Zanussi S.p.A., 33170 Pordenone (IT); RO-SA PLAST S.p.A., I-33080 Porcia, Pordenone (IT)
(72) Inventor: Durazzani, Piero, 33080 Porcia, Pordenone (IT); Sandrin, Giannino, 33080 Porcia, Pordenone (IT)
(74) Representative: Giugni, Valter

(56) References cited:
- EP-A- 0 048 559
- EP-A- 0 477 554
- DE-A- 4 237 117
- US-A- 4 378 837

## Description

### SCOPE OF THE INVENTION

The present invention refers to a method for producing a cross-flow heat-exchanging apparatus, in particular one adapted to condense steam in a clothes drier, as well as a heat-exchanging device produced according to such a method.

Throughout this patent specification, the term "clothes drier" is used to also mean any such other domestic appliance capable to carry out, after the automatic washing of a washload (e.g. clothes or tableware), a drying cycle to dry the same washload, while the term "steam" is used to also mean the moisture-laden air which is removed from the washload during such a drying operation.

### STATE OF THE ART

The steam that is removed from the clothes being dried in modern clothes driers is caused to be condensed by the use of fresh air, sucked in from the ambient, as the cooling medium, rather than exhausting it into the ambient or the outside atmosphere. The heat exchanging devices used to such a purpose have to meet a number of different requirements, such as high efficiency, low space occupancy, corrosion resistance and low cost.

EP-A-0 429 953 and DE 42 37 117 A1 may be cited among the patent specifications dealing with or describing cross-flow condensing devices for use in such applications.

In the steam condensing device illustrated in EP-A-0 429 953, the walls of the channels of one of the two media (i.e. steam) are made using a plurality of appropriately cut and bent flexible sheets of plastic material which are connected to each other by means of mounting frames that are again made of plastic material, albeit rigid. These frames form the walls and, at the same time, the inlet sections of the channels of the other of said two media (i.e. air) and are adapted to. be superimposed. Such a condenser construction has a poor thermodynamic efficiency, since all of its component parts are made using materials with a low thermal conductivity, and is furthermore excessively expensive to manufacture.

The condensing device disclosed in DE 42 37 117 A1 comprises a stack of aluminium tubes and two head portions which are made of a polymer material with a low linear shrinkage property and are formed into a frame-like shape. The vertical spacings provided between a tube and the next one form the channels for one of the two media (i.e. steam). The head portions, which are obtained by overmoulding the plastic material directly onto the free ends of the tubes, form in turn the inlet and outlet sections of the second medium (i.e. air). The critical points of such a construction are as follows.

- The free ends of the aluminium tubes need undergoing an additional mechanical processing in order to allow for the insertion of the male portion of the mould for the frames to be overmoulded thereonto. The wall thickness of the tubes must be relatively strong (orientatively from 0.5 to 0.8 mm) since the free edges of their end portions must be flared in order to allow for the insertion of the male portion of the mould. This of course brings about a certain waste of material (aluminium) and negatively affects the thermodynamic efficiency of the steam condenser.

- It is practically impossible to obtain a full, accurate match between the male and the female portions of the mould, so that the free ends of the tubes tend to get damaged during overmoulding of the head portions. Furthermore, there are no means available which can effectively be employed to prevent the free ends of the tubes and the head portions from mutually slipping in relation to each other, since they cannot be positively secured during overmoulding of the polymer material. As a result it cannot be ensured that the channels have a perfect air-tightness, considering also the repeated thermal changes which they are subject to, due to the cyclic operation of the clothes drier.

- The corresponding production tooling and equipment appear to be rather unreliable

### SUMMARY OF THE INVENTION

It therefore is an object of the present invention to provide an essentially low-cost method for producing a heat-exchanging device of the aforementioned type which is effective and easy to be manufactured, does away with any waste of materials, enables a high thermodynamic efficiency to be reached, thanks also to a perfect air-tightness of the channels carrying the two media.

It is a further object of the present invention to provide a heat-exchanging device of the aforementioned type, which is produced in accordance with said method and is particularly adapted to be used as a steam condenser in a clothes drier.

These object are advantageously reached by the features of the appended claims.

### SHORT DESCRIPTION OF THE ACCOMPANYING DRAWING

- Figure 1 is a block diagram illustrating the various steps of the method according to the present invention;
- Figure 2 is a schematical view of a preferred embodiment of said stack of thin sheet-metal foils;
- Figure 3 is a partially cut-away overall view of a steam condenser for a clothes drier produced according to the method of the present invention;
- Figure 4 is a view of only a portion of the same steam condenser as sectioned vertically along the IV-IV line of Figure 3;
- Figure 5 is an overall view, similar to the one appearing in Figure 3, of a variant of the steam condenser for a clothes drier

### DESCRIPTION OF THE INVENTION

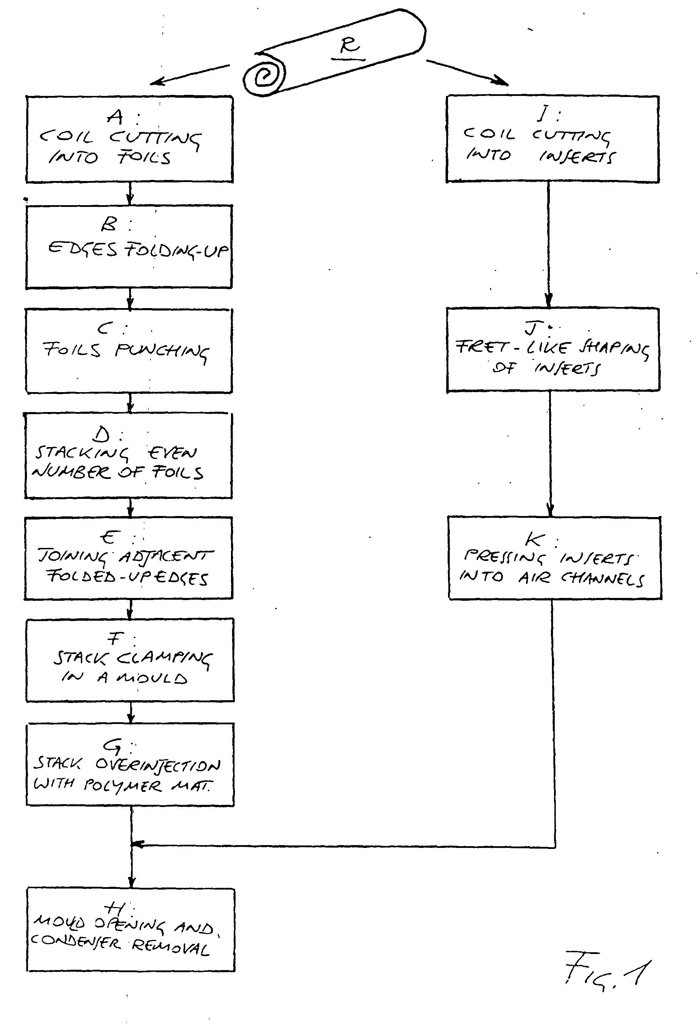

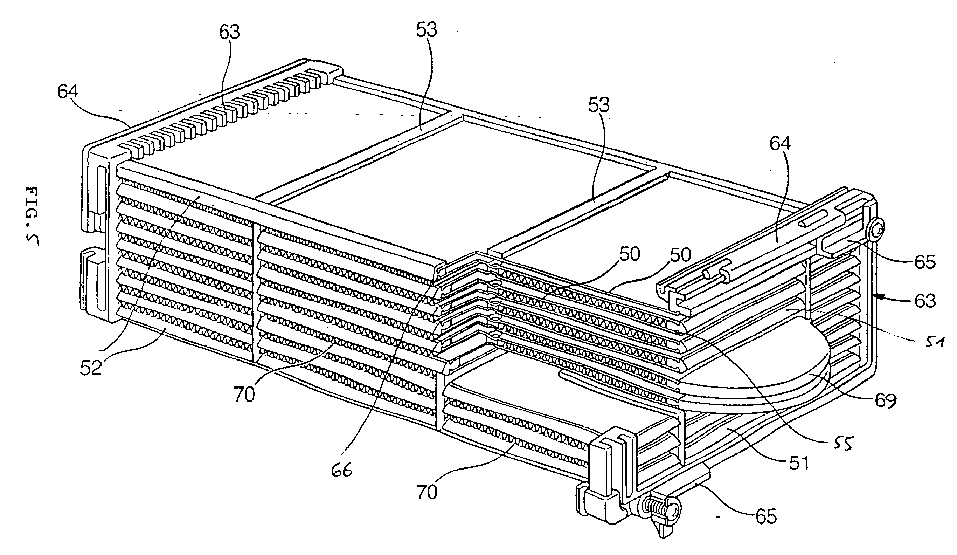

The method according to the present invention is aimed at maximizing the efficiency with which the two media exchange heat between each other, avoiding any waste of materials, and simplifying the production tooling and equipment. It includes, with reference to Figure 1, following steps, starting from a coil R of thin aluminium sheet-(thickness of approx. 0.2 mm):
A) Cutting of the coil in order to obtain a plurality of thin aluminium planar foils, or sheets, having a substantially rectangular shape, in the desired size.
B) Folding back of the opposite parallel edges of the foils in a mutually different direction, e.g. upwards along the short sides and downwards along the long sides of the foils.
C) Punching of the foils so as to obtain, in each one of them, a plurality of apertures, namely rows of countersunk holes along the folded-up edges; at least two rows of cupped, perforated impressions running parallel to the sides of the same foil; two through-holes at the points where the above cited rows of cupped and perforated impressions meet.
D) Stacking of an even number of foils arranged in such a manner that the folded-up edges of two adjoining foils are substantially superimposed.
E) Mutual joining together of the adjoining pairs of foils by making use of the countersunk holes provided along the folded-up edges to this purpose, so as to form a stack of metal foils.
F) Clamping of such a stack in a mould for the injection moulding of polymer materials, said mould having, in addition to an upper wall and a bottom wall, four peripheral or side walls with male portions adapted to be inserted in the stack parallel to the long sides of the foils, as well as a further appropriate number of male portions adapted to be inserted in the stack parallel to the short sides of the foil.
G) Overinjection of a polymer material with a low linear shrinkage property into said mould so as to cause said material to penetrate inside said stack through the various apertures punched in the foils so as to form in a single operation: both the transversal and the longitudinal strips that hermetically seal the steam and cooling air channels at the folded-up edges of the metal foils; a plurality of ribs, aimed at strengthening the stack of metal foils, extending in the stack along the afore mentioned rows of impressions cupped in the foils; the frame-shaped head portions which enclose the inlets and the outlets of the channels provided for one of the two media, a handgrip with which the condenser is provided.
H) Opening of the side walls of the injection mould under extraction of the male portions thereof and removal of the practically finished steam condenser.
   In order to obtain the steam condenser in the variant shown in Figure 5, which will be described further on, the following steps, generally of a *per se* known nature, have to be carried out in parallel to the above described ones:
I) Cutting of the thin aluminium sheet coil R to obtain the inserts (see below).
J) Shaping of said inserts according to a fret-like pattern.
   Finally, on the already finished steam condenser, i.e. downstream of the above cited step H), the following step is carried out:
K) Pressing of the inserts into the cooling-air channels of the condenser, using generally *per se* known techniques and means to this purpose.

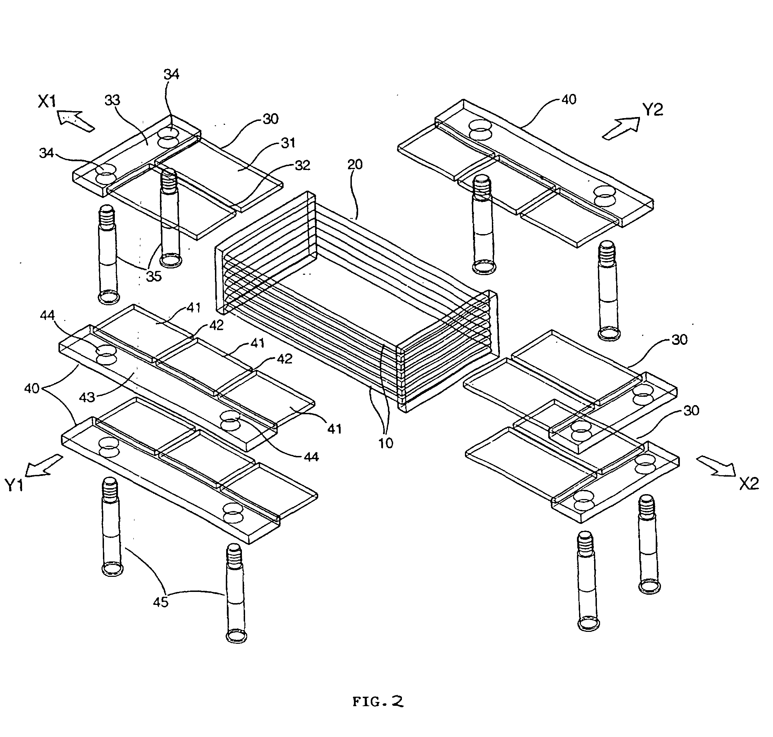

When going through the above cited step D) for stacking the rectangular metal foils 10 to form a stack 20, it appears appropriate to use, as male portions of the mould for the injection of the plastic material, spacer means consisting of first and second rigid cores 30, 40 of the type that is shown schematically in Figure 2.

The first spacing cores 30 are used to form the steam channels which extend in the direction of the longer side of the foils 10 and consist of two plates 31, that are provided in a side-by-side device and are separated from each other by a gap 32, and support gibs 33. These gibs 33 are provided with through-holes 34 for corresponding clamping rods 35 that are connected to hydraulic cylinders (not shown) for the actuation of said spacing cores 30.

The second spacing cores 40 are in turn used to form the cooling air channels which extend in the direction of the shorter side of the foils 10 and consist of three plates 41, which are provided in a side-by-side device and are separated by two gaps 42, and support gibs 43. These support gibs 43 are provided with through-holes 44 for corresponding clamping rods 45 that are connected to hydraulic cylinders (not shown) for the actuation of said spacing cores 40.

The purpose of the spacing cores 30, 40 is to keep the thin aluminium foils 10 clamped in position during the subsequent overmoulding of the polymer material (step G, see Figure 1). Such a material fills, among other things, the gaps 32, 42 between the plates 31, 41 forming the spacing cores 30, and gives therefore rise to inner ribs in the stack 20, as this will be explained in greater detail- further on. Anyway, at the end of the above described method (step H), i.e. when the injection mould is opened, the spacing cores 30, 40 are extracted along two perpendicular axes, preferably in alternate directions, i.e. the first cores 30 are extracted in the directions X1, X2 and the second cores 40 in the directions Y1, Y2 (Figure 2).

The method provided by the invention for the overmoulding of the polymer material on to the thin metal foils offer the considerable advantage that, as opposed to other constructions known in the art, both the structural rigidity of the steam condenser and the air tightness of the steam and cooling air channels are thereby obtained. Such a structural rigidity enables the steam condesning device to be handled and moved without any practical restriction during both the subsequent assembly thereof in a clothes drier and the regular cleaning, care and maintenance performed by the user on the same clothes drier. The air tightness of the channels, both along the walls and at the two head portions of the condensing device, contributes to increasing the efficiency of the heat exchange process.

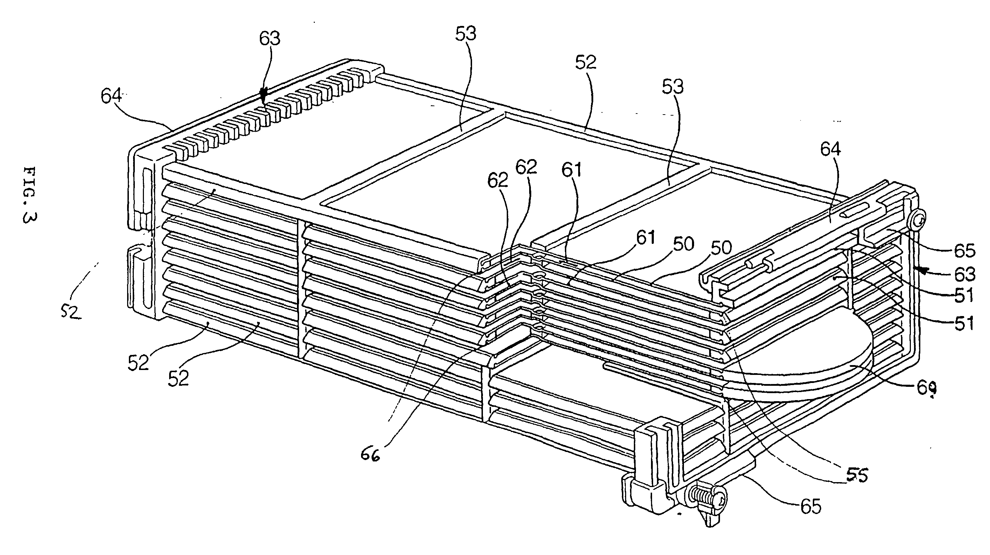

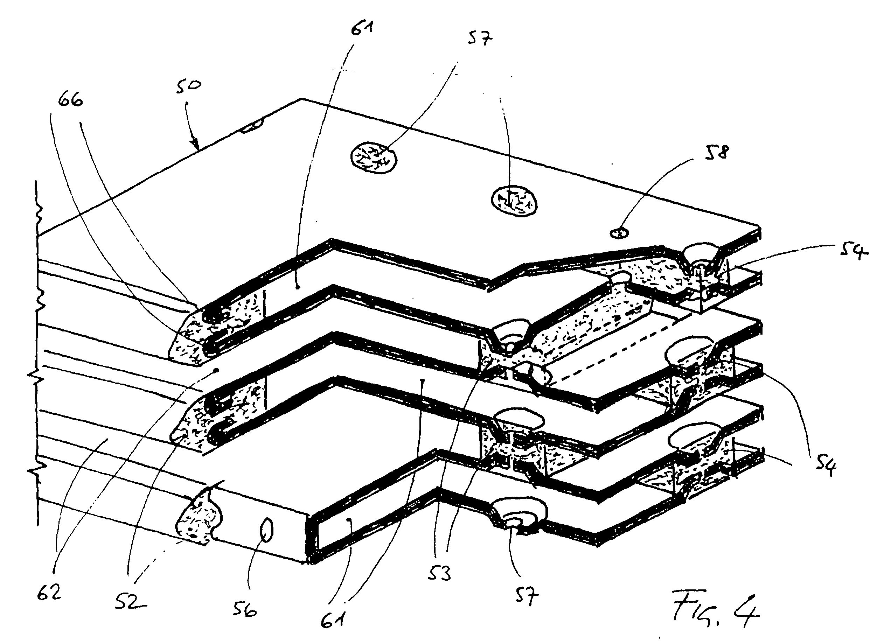

Figures 3 and 4 show the design features of a steam condenser according to the present invention. Such an condenser is in the shape has a box-like configuration, with a plurality of superimposed rectangular foils 50 of very thin aluminium joined to each other along their folded-up edges according to methods that are generally known in the art. The edges 55 along the shorter sides are covered by strips 51, whereas the edges along the longer sides are covered with strips 52, all such strips being made of a polymer material. Two patterns of transverse ribs 53 and a pattern of longitudinal ribs 54 ensure, along with the two frame-shaped head portions 63, the required rigidity to the stack of thin metal foils (see Figure 3). The strips 51 and 52, the ribs 53 and 54, as well as the head portions 63 are made of the same polymer material and are obtained, as it has been already indicated in the above description, through a single overmoulding operation (step G of the method according to the invention, see Figure 1).

Figure 4 illustrates in detail the parts of a steam condenser that are obtained through overmoulding of the polymer material. The strips 52 remain in close contact with the folded-up edges 66 on the longer sides of the thin metal foils 50-since they cling to the countersunk holes 56 obtained through punching along the edges 66 during the step C of the method according to the present invention (see Figure 1). The same applies to the strips 51 concerning the similar folded-up edges 55 (not shown in Figure 4) on the shorter sides of the thin metal foils 50. This practically ensures the lateral tightness of the channels for the steam 61 and the cooling air 62. In turn, the ribs 53 and 54 cling to the cupped and perforated impressions 57 obtained by punching in a direction parallel to the edges of the thin metal foils and, by intersecting each other, are rigidly restrained to one another thanks to two vertical connecting beads of polymer material that form over the entire height of the stack, at the two through-holes punched in all of the thin metal foils, such as the one that is generally referred at 58 in Figure 4. Also these vertical beads connecting the various patterns of ribs to each other are of course formed during the single overmoulding step and this therefore further contributes to both the structural strength and the low production cost of the steam condenser according to the present invention.

As it has already been described hereabove, and is best seen in Figure 3, the same overmoulding step also forms a handgrip 66 that enables the steam condenser to be temporarily removed from the clothes drier in order to be cleaned from contaminants and dirt, such as lint carried over by the steam and dust carried over by the cooling air, that may settle on it during its operation. At its head portions 63 the steam condenser is subsequently completed with a pair of peripheral sealing gaskets 64 and tabs 65 for the firm assembly thereof in its accomodation site in the clothes drier. These latter parts, however, are fully traditional in both their construction and operation, so they do not need to be described here any further.

The variant embodiment shown in Figure 5, where for reasons of greater simplicity the same reference numerals are used to indicate all those items that are common to the steam condenser shown in Figures 3 and 4, is characterized by the fret-shaped inserts 70, which are pressed into the channels 62 for the cooling air after the steam condenser has been formed. The afore described optional steps I through to K of the method according to the present invention refer actually to such a variant of embodiment. As compared to the steam condenser described above with reference to Figures 3 and 4, this variant enables the turbulence of the cooling air flow in the channels 62 to be increased and, as a result, the efficiency of the heat exchange process between the steam and the air to be further enhanced.

## Claims

1. A method for producing a cross-flow device for exchanging heat between two media, in particular a steam condensing device for use in connection with a domestic appliance, comprising the steps of:
(A) cutting a plurality of thin aluminium planar foils, or sheets (10,50), having a substantially rectangular shape;
(B) folding back of the opposite parallel edges (55,66) of the foils in a mutually different direction;
- (D) stacking of an even number of foils (50) in such a manner that the folded-up edges of two adjoining foils are substantially superimposed;
- (E) mutual joining together of the adjoining pairs of foils, so as to form a stack (20);
- (F) clamping such a stack (20) in an injection mould;
- (G) overinjection of a polymer material with a linear shrinkage property into said mould, so as to form frame-shaped head portions (63) enclosing inlets and outlets of channels (61) provided for one of the said two media;
**characterized in that**
said thin metal foils (50), prior to the clamping of the injection mould, are subjected to:
(C) a punching phase so as to obtain a plurality of apertures, namely: rows of countersunk holes (56) along the folded-up edges (55,66); at least two rows of cupped, perforated impressions (57) running parallel to the sides of the same foil; two through holes (58) at the points where the above cited rows of cupped and perforated impressions (57) meet;
following items of polymer material are also obtained during the overinjection step (G):
- transversal and longitudinal strips (51,52) that hermetically seal the steam and cooling air channels at the folded-up edges (55) of the metal foils (50);
- a plurality of transverse and longitudinal ribs (53,54), aimed at strengthening the stack (20) of metal foils, extending in the stack along the rows of impressions cupped in the foils.

2. A method according to claim 1, **characterized in that** a handgrip (69) is produced on one of said two head portions (63) with the same and single overmoulding step (G) .

3. A method according to claim 1 or 2, **characterized in that**, in a *per se* known manner, inserts (70) in the form of appropriately shaped fins or the like are forced into the channels (62) provided for one of the two media so as to increase the flow turbulence of said medium and, as a result, to enhance the thermodynamic efficiency.

## Patentansprüche

1. Verfahren zum Herstellen einer Kreuzströmungsvorrichtung zum Austauschen von Wärme zwischen zwei Medien, insbesondere einer Dampfkondensiervorrichtung zur Verwendung in Verbindung mit einer Haushaltsanwendung, das die Schritte aufweist:
- (A) Schneiden einer Mehrzahl von dünnen, planaren Aluminiumfolien oder Platten (10, 50), die eine im wesentlichen rechtwinklige Form haben;
- (B) Zurückfalten der gegenüberliegenden, parallelen Kanten (55, 66) der Folien in einer zueinander unterschiedlichen Richtung;
- (D) Stapeln einer geraden Anzahl von Folien (50) in einer solchen Art und Weise, daß die hochgefalteten Kanten der zwei aneinanderstoßenden Folien im wesentlichen übereinandergelegt sind;
- (E) Gemeinsames Verbinden der aneinanderstoßenden Paare von Folien, um so einen Stapel (20) zu bilden;
- (F) Klemmen eines solchen Stapels (20) in einer Spritzgießform;
- (G) Überspritzen eines Polymermaterials mit einer linearen Schrumpfungseigenschaft in die Form hinein, um so rahmenförmige Kopfbereiche (63) zu bilden, die Einlässe und Auslässe von Kanälen (61), vorgesehen für eines der zwei Medien, umschließen;
**dadurch gekennzeichnet, daß**
die dünnen Metallfolien (50), vor dem Klemmen der Spritzform, unterworfen werden:
(C) einer Stanzphase, um so eine Mehrzahl von Öffnungen zu erhalten, nämlich: Reihen aus versenkten Löchern (56) entlang der hochgefalteten Kanten (55, 66); mindestens zwei Reihen von kappenförmigen, perforierten Eindrückungen (57), die parallel zu den Seiten derselben Folie laufen; zwei Durchgangslöcher (58) an den Punkten, wo sich die vorstehend angegebenen Reihen von kappenförmigen und perforierten Eindrückungen (57) treffen;
wobei folgende Elemente aus Polymermaterial auch während des Überspritzungsschritts (G) erhalten werden:
- Quer- und Längsstreifen (51, 52), die hermetisch die Dampf- und Kühlluftkanäle an den hochgefalteten Kanten (55) der Metallfolien (50) abdichten;
- eine Mehrzahl von Quer- und Längsrippen (53, 54), die für eine Aussteifung des Stapels (20) aus Metallfolien dienen, die sich in dem Stapel entlang der Reihen von Eindrückungen, kappenförmig ausgebildet in den Folien, erstrecken.

2. Verfahren nach Anspruch 1, **dadurch gekennzeichnet, daß** ein Handgriff (69) an einem der zwei Kopfbereiche (63) mit demselben und einzelnen Überspritzungsschritt (G) gebildet wird.

3. Verfahren nach Anspruch 1 oder 2, **dadurch gekennzeichnet, daß**, in einer *per* se bekannten Art und Weise, Einsätze (70) in der Form von geeignet geformten Lamellen oder dergleichen in die Kanäle (52), vorgesehen für eines der zwei Medien, um so die Strömungsturbulenz des Mediums zu erhöhen, und, als Folge, um die thermodynamische Effektivität zu erhöhen, eingebracht werden.

## Revendications

1. Procédé de fabrication d'un dispositif à courants croisés pour échanger de la chaleur entre deux milieux, en particulier un dispositif de condensation de vapeur destiné à être utilisé en lien avec un appareil ménager, comprenant les étapes de :
- (A) découpe d'une pluralité de feuilles minces et planes d'aluminium, ou de tôles (10, 50) ayant une forme sensiblement rectangulaire ;
- (B) de repliage des bords parallèles opposés (55, 66) des feuilles dans un sens mutuellement différent ;
- (D) d'empilement d'un nombre pair de feuilles (50) de manière telle que les bords repliés vers le haut de deux feuilles contiguës sont sensiblement superposés ;
- (E) de jonction mutuelle ensemble des paires contiguës de feuilles, de manière à former une pile (20) ;
- (F) de serrage de cette pile (20) dans un moule pour coulage par injection ;
- (G) de surinjection d'une matière polymère ayant une caractéristique de rétrécissement linéaire dans ledit moule, de manière à former les portions de tête en forme de cadre (63) renfermant des entrées et des sorties de canaux (61) prévus pour l'un desdits deux milieux ;
**caractérisé en ce que**
lesdistes minces feuilles de métal (50), avant le serrage du moule de coulage par injection, sont soumises à :
- (C) une phase de poinçonnage de manière à obtenir une pluralité d'ouvertures, à savoir : des rangées de trous noyés (56) le long des bords repliés (55, 66) ; au moins deux rangées d'impressions à cuvette, perforées (57) passant parallèlement aux côtés de la même feuille ; deux trous traversant (58) aux points où les rangées citées ci-dessus d'impressions en cuvette et perforées (57) se rencontrent ;
les articles suivants de matière polymère sont également obtenus pendant l'étape de surinjection (G) :
- bandes transversales et longitudinales (51, 52) qui scellent hermétiquement les canaux de vapeur et d'air de refroidissement sur les bords repliés (55) des feuilles métalliques (50) ;
- une pluralité de nervures transversales et longitudinales (53, 54) dont le but est de renforcer la pile (20) de feuilles métalliques, s'étendant dans la pile le long des rangées d'impression embouties dans les feuilles.

2. Procédé selon la revendication 1, **caractérisé en ce qu'**une poignée (69) est produite sur l'une desdites deux portions de tête (63) par la même et unique étape de surmoulage (G).

3. Procédé selon la revendication 1 ou 2, **caractérisé en ce que**, d'une manière connue en soi, des inserts (70) en forme d'ailettes de forme appropriée ou similaire sont poussés dans les canaux (62) prévus pour l'un des deux milieux de manière à accroître la turbulence d'écoulement dudit milieu et, en conséquence, à augmenter l'efficacité thermodynamique.
